# EUROPEAN PATENT APPLICATION

(11) **EP 4 442 343 A1**
(43) Date of publication of application: **09.10.2024**
(21) Application number: 24157964.8
(22) Date of filing: 15.02.2024
(51) Int. Cl.: B01D 15/10, B01D 15/12, B01D 15/14, B01D 15/18, B01D 15/26, B01D 15/36, B01D 15/42, B01J 20/02, B01J 20/04, B01J 20/08, B01J 39/02, B01J 39/09, B01J 39/10, C02F 1/28, C02F 1/66, C02F 9/00, C22B 3/24, C22B 3/42, C22B 7/00, C22B 26/12, H01M 6/52

(54) **PROCESS FOR SELECTIVE PURIFICATION OF LITHIUM FROM AN AQUEOUS LITHIUM SALT-CONTAINING SOLUTION**

(30) Priority: 17.02.2023 US 202363446364 P
(71) Applicant: Koch Technology Solutions UK Limited, London EC2V 7AF (GB)
(72) Inventor: Collias, Constantine, Toronto, M4E 2E9 (CA); Bootsma, Jason Alan, Wichita, 67232 (US); Shay, Daniel Travis, Chadds Ford, 19317 (US)
(74) Representative: Ter Meer Steinmeister & Partner

(57) **Abstract**

The disclosed process relates to a process for selectively purifying a lithium product stream from an aqueous lithium salt-containing solution in a continuous mode, said process comprising the steps of: a) introducing said aqueous lithium salt-containing solution to an arrangement of three or more packed-bed columns in series each filled with a lithium selective sorbent, wherein at least two of said three or more columns are at an adsorption stage, with one at a leading lithium chloride adsorption stage and one or more at a trailing lithium chloride adsorption stage, and at least one of said three or more columns is simultaneously at a lithium chloride desorption stage; b) flowing said aqueous lithium salt-containing solution through said at least two of said three or more columns at a leading lithium chloride adsorption stage and a trailing lithium chloride adsorption stage to adsorb lithium chloride from the aqueous lithium salt-containing solution and respectively form a fully-saturated sorbent and a partially-saturated sorbent; c) flowing a desorbent fluid through said at least one of said three or more columns at a lithium chloride desorption stage to desorb lithium chloride from the fully-saturated sorbent in a column from a leading lithium chloride adsorption stage of a previous cycle in an eluate stream; and d) recovering a lithium product stream from the eluate stream, wherein when the lithium selective sorbent in said column at a leading lithium chloride adsorption stage is fully-saturated with lithium chloride, said column transitions directly to said lithium chloride desorption stage to desorb lithium chloride once appropriate void volume is displaced; said column at a trailing lithium chloride adsorption stage transitions directly to said leading lithium chloride adsorption stage for further adsorption of lithium chloride; and said column at a lithium chloride desorption stage transitions directly to said trailing lithium chloride adsorption stage for initial adsorption of lithium chloride once appropriate void volume is displaced; without any intermediate washing stages of the media between any of said transitions.

## Description

### RELATED APPLICATIONS

This application claims priority to and the benefit of U.S. Provisional Patent Application No. 63/446,364 filed February 17, 2023. The entire disclosure of this provisional patent application is incorporated herein by reference.

### TECHNICAL FIELD

The disclosed process relates to selectively purifying a lithium product stream from an aqueous lithium salt-containing solution in a continuous mode without any intermediate recycle or wash stages of the media.

### DESCRIPTION OF RELATED ART

The global lithium market size is expected to expand over forthcoming years. Electrification of vehicles will command a significant volume of lithium-ion batteries, driving this anticipated growth in the global lithium market. As the 33rd most abundant element, lithium (Li) is present in the earth's crust at 0.002-0.006 wt% and is distributed widely in trace amounts in rocks, soil and surface water, groundwater and sea water. Hard rock and evaporative pond mining are the two predominant means for sourcing lithium salts. However, these methods are expensive, requiring large footprints which scar the land and create significant wastewater leaching environmental issues.

Processes for selective adsorption of lithium salts from aqueous sources are being developed and show promise for reducing the cost and environmental impact of lithium mining. Such processes are called direct lithium extraction ("DLE") methods. The main stages of a DLE process include selective extraction of the lithium from an aqueous lithium salt-containing solution using a medium which may be, for example, an adsorbent material or an ion-exchange material followed by elution (for example, desorption) of the lithium from the media with a desorption fluid (also known as an eluant) to produce an eluate stream. This eluate stream is typically at a higher lithium concentration and lower impurity level than the original aqueous lithium salt-containing solution. However, usually further concentration and purification steps are required to produce a lithium chloride product than can be processed into a form suitable for lithium-ion batteries.

Low-cost recovery of lithium from aqueous lithium salt-containing solutions such as brines requires the use of lithium selective media which may be high-capacity reusable sorbents. Layered aluminum double hydroxide chloride sorbents, LiCl-Al2(OH)6.nH2O (Li-LDH) have shown promising application in selective lithium extraction. While lithium loading capacities for these materials are low (0.1-10 mg Li / g media) compared to other adsorption processes, their high selectivity to lithium and the ability to desorb (also known herein as elute) with water make them attractive candidates for commercial applications. However, there is a need to maximize the efficiency and onstream time (i.e. uptime) of such sorbents in a fixed bed process.

### SUMMARY

Selective adsorption of lithium salts from aqueous sources is typically currently conducted with standalone columns of sorbent operating in parallel. However, this necessitates the use of inefficient cycle configurations to meet desired performance parameters for downstream processing of the lithium chloride product. These cycle configurations are generally centered around many internal media recycle or media wash stages to maximize the total concentration factor of the entire process. The high frequency of such internal media recycle or media wash stages reduces the efficiency of the overall process.

Embodiments herein provide solutions to overcome this known problem of inefficient cycle configurations. Specifically, by configuring the columns in a carousel or lead-lag configuration, it is possible to reduce or eliminate some of these less efficient processing steps, increasing the on-stream uptime (i.e. uptime) for net flow of the aqueous lithium salt-containing solution and net lithium product flow, whilst minimizing the impact to total cycle time introduced by internal media recycle and media wash stages. On a per-column basis, more of the total processing can be devoted to lithium adsorption or desorption, improving overall process efficiency and reducing costs.

In a first aspect herein, there is provided a process for selectively purifying a lithium product stream from an aqueous lithium salt-containing solution in a continuous mode, said process comprising the steps of: a) introducing said aqueous lithium salt-containing solution to an arrangement of three or more packed-bed columns in series each filled with a lithium selective sorbent, wherein at least two of said three or more columns are at an adsorption stage, with one at a leading lithium chloride adsorption stage and one or more at a trailing lithium chloride adsorption stage, and at least one of said three or more columns is simultaneously at a lithium chloride desorption stage; b) flowing said aqueous lithium salt-containing solution through said at least two of said three or more columns at a leading lithium chloride adsorption stage and a trailing lithium chloride adsorption stage to adsorb lithium chloride from the aqueous lithium salt-containing solution and respectively form a fully-saturated sorbent and a partially-saturated sorbent; c) flowing a desorbent fluid through said at least one of said three or more columns at a lithium chloride desorption stage to desorb lithium chloride from the fully-saturated sorbent in a column from a leading lithium chloride adsorption stage of a previous cycle in an eluate stream; and d) recovering a lithium product stream from the eluate stream, wherein when the lithium selective sorbent in said column at a leading lithium chloride adsorption stage is fully-saturated with lithium chloride, said column transitions directly to said lithium chloride desorption stage to desorb lithium chloride once appropriate void volume (also known in the art as dead volume) is displaced; said column at a trailing lithium chloride adsorption stage transitions directly to said leading lithium chloride adsorption stage for further adsorption of lithium chloride; and said column at a lithium chloride desorption stage transitions directly to said trailing lithium chloride adsorption stage for initial adsorption of lithium chloride once appropriate void volume is displaced; without any intermediate washing stages of the media between any of said transitions.

In an embodiment of the process, the aqueous lithium salt-containing solution is a naturally occurring solution or a synthetic solution.

In an embodiment of the process, the lithium selective sorbent is an ion sieve adsorbent, a lithium-metal oxide adsorbent, a mixed metal oxide adsorbent, an alkali or alkali earth metal/alumina matrix, transition metal/alumina matrix or a molecular sieve adsorbent.

In an embodiment of the process, the desorption is co-current or counter current with respect to the adsorption stage.

In an embodiment of the process, the desorbent fluid is water, pH adjusted water or a polar organic solvent.

In an embodiment of the process, the desorbent fluid is derived from a process operation or is a recycled process stream.

In an embodiment of the process, the aqueous lithium salt-containing solution is subject to a pre-treatment step of mechanical pre-treatment and/or pH adjustment.

In a second aspect herein, there is provided apparatus for selectively purifying a lithium product stream from an aqueous lithium salt-containing solution in a continuous mode, said apparatus comprising: a circuit of three or more packed-bed columns in series each filled with a lithium selective sorbent, wherein at least two of said three or more columns are at an adsorption stage, with one at a leading lithium chloride adsorption stage and one or more at a trailing lithium chloride adsorption stage, and at least one of said three or more columns is simultaneously at a lithium chloride desorption stage; wherein when the lithium selective sorbent in said column at a leading lithium chloride adsorption stage is fully-saturated with lithium chloride, said column transitions directly to said lithium chloride desorption stage to desorb lithium chloride once appropriate void volume is displaced; said column at a trailing lithium chloride adsorption stage transitions directly to said leading lithium chloride adsorption stage for further adsorption of lithium chloride; and said column at a lithium chloride desorption stage transitions directly to said trailing lithium chloride adsorption stage for initial adsorption of lithium chloride once appropriate void volume is displaced; without any intermediate washing stages between any of said transitions.

Other features and aspects of the disclosure are set forth in greater detail below.

### BRIEF DESCRIPTION OF THE DRAWINGS

The present application is illustrated by way of example and not limited in the accompanying figures in which like reference numerals indicate similar elements and in which:
Figure 1 is a representation of a three-column configuration with two columns at an adsorption stage and one column at a desorption stage.
Figure 2 is representation of a three-column configuration at +1 and +n cycle stages.

### DETAILED DESCRIPTION

The detailed description that follows describes exemplary embodiments and the features disclosed are not intended to be limited to the expressly disclosed combination(s). Therefore, unless otherwise noted, features disclosed herein may be combined together to form additional combinations that were not otherwise shown for purposes of brevity.

Unless otherwise defined, all scientific and technical terms used herein are intended to have the same meaning as would be understood by a person of skill in the art to which this disclosure relates. The materials, methods and examples are illustrative only and not intended to be limiting. The word "comprise" and variations such as "comprises" or "comprising" are understood to mean the inclusion of a stated integer or group of integers but not the exclusion of any other integer or group of integers.

Unless specifically stated otherwise or obvious from the context used herein, the terms "about" and "approximately" are understood as lying within a range of normal tolerances in the art, for example within two standard deviations of the mean. "About" and "approximately" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

The disclosure is directed to a process for selectively purifying a lithium product stream from an aqueous lithium salt-containing solution in a continuous mode. It has been discovered that the process as disclosed herein can reduce or eliminate inefficient processing steps, thereby increasing the total uptime for net flow of an aqueous lithium salt-containing solution and net lithium product flow. In addition, the process as disclosed herein may improve overall process efficiency and reduce costs.

The process as disclosed herein includes a step of introducing an aqueous lithium salt-containing solution to an arrangement of three or more packed-bed columns in series each filled with a lithium selective sorbent.

The source of the aqueous lithium salt-containing solution is not limited by the disclosure but may originate from a variety of sources such as any of a geothermal source, oil fields, hard rock lithium mining, mineral digestion, tailings from a lithium mining process, a well application, a clay or sea water. In another embodiment the aqueous lithium salt-containing solution is produced synthetically by extraction from a lithium containing material. Examples of lithium containing materials include clays, black mass, off-specification battery materials, recycled battery materials or combinations of these materials. Examples of components of the extractant are any mineral acid or organic acid or metal halides. The extractant is then pH adjusted to a desired range for the sorbent. The aqueous lithium salt-containing solution may therefore be a naturally occurring solution or a synthetic solution, or a combination thereof. The lithium may be considered to be a brine and may be present in the aqueous lithium-containing solution as, for example, lithium chloride.

In one embodiment, the process may include a step of pre-treating the aqueous lithium salt-containing solution. For instance, the pre-treatment may be conducted using various means for various reasons. In one embodiment, the pre-treatment may be a mechanical pre-treatment. For instance, the pre-treatment may simply be for the removal of solids within the aqueous lithium-containing solution. The means for removal of such solids is not necessarily limited by the disclosure. For instance, such pre-treatment may include filtration. The filtration may include multi-media depth filtration, membrane micro-filtration, membrane ultra-filtration, as well as other methods generally utilized in the art. If necessary, in one embodiment, the pre-treatment may include a pH adjustment. For instance, the pH adjustment may be provided by using a pH adjustment solution. In this regard, the pH adjustment solutions are not necessarily limited by the disclosure and may be any solution generally utilized in the art for adjusting pH. This pH adjustment solution may, depending on the desired direction of the pH adjustment, include an acid or a base. If necessary, in one embodiment, the pre-treatment may include a pH adjustment and filtration. The pre-treatment may be to concentrate the aqueous lithium salt-containing solution. Such concentration may be using means generally known in the art, such as, without limitation, evaporation or reverse osmosis. The pre-treatment may be to remove certain impurities present in the aqueous lithium salt-containing solution, such as those that may affect the purity of the final lithium product. These impurities may include multi-valent ions, such as divalent ions. Such pre-treatment may include a step of neutralization, such as with an alkali or ammonia followed by solids separation.

The three or more packed-bed columns in series are each filled with a lithium selective medium which may be an adsorbent medium. In one embodiment, the lithium selective adsorbent medium may be any substance that is able to adsorb lithium chloride from the aqueous lithium salt-containing solution. The specific nature of the lithium selective sorbent is not limited by the disclosure but may be any of an ion sieve adsorbent, a lithium-metal oxide adsorbent, a mixed metal oxide adsorbent, an alkali or alkali earth metal/alumina matrix, transition metal/alumina matrix or a molecular sieve adsorbent.

The lithium-selective sorbent can allow for the extraction or recovery of a relatively high amount of lithium from the aqueous lithium-containing solution. For instance, the amount of lithium adsorbed from the aqueous lithium-containing solution may be 20 mol% or more, such as 30 mol% or more, such as 40 mol% or more, such as 50 mol% or more, such as 60 mol% or more, such as 70 mol% or more, such as 80 mol% or more, such as 90 mol% or more, such as 95 mol% or more based on the total amount of lithium present in the aqueous lithium-containing solution. It should be understood that such amount may be based on the total amount of lithium present in the aqueous lithium-containing solution that is provided to the lithium-selective sorbent. In this regard, the aqueous lithium-containing solution containing lithium may be converted to a raffinate (also known herein as a barren brine). The barren aqueous lithium-containing solution may be returned to the source from which it was originally obtained or an alternative geological formation.

The process as disclosed herein uses packed-bed columns of sorbent material, which may alternatively be known as fixed-bed columns. The columns are arranged in a series configuration.

The process as disclosed herein requires at least three or more columns. However, there may be any number of columns depending on the size of the arrangement and the volume of aqueous lithium salt-containing solution to be processed, arranged in parallel or series. For instance, there may be 3, 4, 5, 6, 7, 8, 9, 10, 11, 12, 13, 14, 15, 16, 17, 18, 19, 20, 21, 22, 23, 24, 25, or 25-30 columns, 30-35 columns, 35-40 columns, 40-45 columns, 45-50 columns or more than 50 columns in total.

For every three columns, two are always at a lithium adsorption stage and one is at a lithium desorption stage. However, the process as disclosed herein contemplates any number of columns. Therefore, for every three or more columns, two or more are always at a lithium adsorption stage and one or more is at a lithium desorption stage. As long as there are a minimum of three columns, with two columns at a lithium adsorption stage and one column at a lithium desorption stage, the process will advantageously improve overall process efficiency. For instance, there may be 2 columns at a lithium adsorption stage and 1 column at a lithium desorption stage; 3 columns at a lithium adsorption stage and 1 or more columns at a lithium desorption stage; 4 columns at a lithium adsorption stage and 1 or more columns at a lithium desorption stage; 5 columns at a lithium adsorption stage and 1 or more columns at a lithium desorption stage; 6 columns at a lithium adsorption stage and 1 or more columns at a lithium desorption stage; 7 columns at a lithium adsorption stage and 1 or more columns at a lithium desorption stage; 8 columns at a lithium adsorption stage and 1 or more columns at a lithium desorption stage; 9 columns at a lithium adsorption stage and 1 or more columns at a lithium desorption stage; 10 columns at a lithium adsorption stage and 1 or more columns at a lithium desorption stage; more than 10 columns at a lithium adsorption stage and 1 or more columns at a lithium desorption stage; more than 20 columns at a lithium adsorption stage and 1 or more columns at a lithium desorption stage; more than 30 columns at a lithium adsorption stage and 1 or more columns at a lithium desorption stage; more than 40 columns at a lithium adsorption stage and 1 or more columns at a lithium desorption stage; more than 50 columns at a lithium adsorption stage and 1 or more columns at a lithium desorption stage, etc.

In the process as disclosed herein, at least two of the three or more columns are at an adsorption stage. One of these two such columns is at a leading lithium chloride adsorption stage and one or more is at a trailing lithium chloride adsorption stage. The trailing lithium chloride adsorption stage precedes the leading lithium chloride adsorption stage and is the column at an initial loading stage. The column at the leading lithium chloride adsorption stage is the column at the last of the loading stages before desorption occurs. In an embodiment where there are more than two columns at a lithium adsorption stage, one column is at a leading lithium chloride adsorption stage and one or more columns are at a trailing (or lagging) lithium chloride adsorption stage.

During operation, an aqueous lithium salt-containing solution is loaded into at least two columns at an adsorption stage. The direction of loading may be from either end of the vessel, for example in an upward direction or a downward direction or a side-to-side direction. The flow of the aqueous lithium salt-containing solution moves through the columns at a leading lithium chloride adsorption stage and a trailing lithium chloride adsorption stage before exiting the system. As the aqueous lithium salt-containing solution moves through the two columns, lithium is adsorbed onto the lithium selective sorbent in these columns and loading continues until the sorbent in the column at the leading lithium chloride adsorption stage becomes fully-saturated. When the column at the leading lithium chloride adsorption stage becomes fully-saturated, the column at the trailing lithium chloride adsorption stage is partially-saturated.

A fully-saturated lithium selective sorbent is considered to have full-utilization or be fully-utilized. A fully-utilized or fully-saturated sorbent operates with a feed lithium concentration-outlet to concentration-inlet ratio in a range of 99-0.1%, with a preferred range being 90-10%, more preferably 80-20%, more preferably 70-30%, and more preferably still 60-40%. Consequently, a leading column which is considered to be fully-utilized shows a degree of lithium chloride passing through (e.g., shows lithium breakthrough). Such breakthrough will be caught by the partially-saturated sorbent in the column at a trailing lithium chloride adsorption stage.

A partially-saturated lithium selective sorbent is considered to have under-utilization or be under-utilized. An under-utilized or partially-saturated sorbent operates with a feed lithium concentration-outlet: concentration-inlet ratio in a range of 0.1-99%, with a preferred range being 10-90%, more preferably 20-80%, more preferably 30-70%, and more preferably still 40-60%.

The third column is at the lithium chloride desorption stage where the lithium product from a column at the leading lithium chloride adsorption stage in a previous cycle is being removed, with either co-current or counter-current flow of desorbent fluid.

Once the lithium has been adsorbed to the lithium-selective sorbent or been recovered by the lithium-selective media, the adsorbed lithium is desorbed (or eluted) from the media using various methods. The specific nature of the desorbent fluid is not limited by the disclosure. The desorption process (also known as elution) may be conducted with a liquid. The liquid utilized may be dictated by the type of lithium-selective sorbent utilized. The liquid may comprise water, pH adjusted water or polar organic solvent.

In one embodiment, the liquid may primarily include water. For instance, the water may be present in an amount of 95 wt.% or more, such as 98 wt.% or more, such as 99 wt.% or more, such as 100 wt.%.

In one embodiment, the liquid may be pH adjusted water and thereby include water in combination with an acid. For instance, the liquid may be a dilute acid (i.e., an acid mixed with water in an amount more than the acid itself). In this regard, in one embodiment, the liquid may include more water than acid on a weight basis. The acid may be hydrochloric acid or sulfuric acid or any other suitable acid such as, without limitation, citric acid or carbonic acid. The concentration of acid may be less than 1 M, such as 0.5 M or less, such as 0.2 M or less, such as 0.1 M or less. The acid may have a pH of 1 or more, such as 1.5 or more, such as 2 or more, such as 2.5 or more. The pH may be 4 or less, such as 3.5 or less, such as 3 or less, such as 2.5 or less, such as 2 or less.

An average contact time of the adsorbed lithium in the lithium-selective sorbent with the liquid, such as the water or pH adjusted water, for desorption may be 10 minutes or less, or 8 minutes or less, or 5 minutes or less, or 4 minutes or less, or 3 minutes or less, or 2 minutes or less, or 1 minute or less.

The desorbent fluid may be a recycled process stream or may be derived from other process operation, for example a reverse osmosis permeate, an evaporator condensate, an ion exchange regeneration or any combination thereof.

The process of desorption may be either co-current or counter-current with respect to the process of adsorption.

Once a specific setpoint is reached (which may be volumetric or determined in any other way), the arrangement moves to the next stage and the columns rotate where they are in the operating cycle, e.g. for a three-column arrangement, the column that was at the lithium chloride desorption stage (i.e., eluting) is now in the first of the two loading stages, namely at a trailing lithium chloride adsorption stage; the column that has just seen two loading stages, namely the column at the leading lithium chloride adsorption stage, is now at the lithium chloride desorption stage (i.e., eluting); and the column that has done one of two loading stages moves to the second loading stage, namely the column at the trailing lithium chloride adsorption stage moves to the leading lithium chloride adsorption stage.

Critically, there are no intermediate wash or recycle stages of the media between either of the lithium adsorption stages or between either a lithium adsorption stage and the lithium desorption stage. Therefore, the column at the leading lithium chloride adsorption stage transitions directly to said lithium chloride desorption stage to desorb lithium chloride once appropriate void volume is displaced; the column at a trailing lithium chloride adsorption stage transitions directly to the leading lithium chloride adsorption stage for further adsorption of lithium chloride; and the column at a lithium chloride desorption stage transitions directly to a trailing lithium chloride adsorption stage for initial adsorption of lithium chloride once appropriate void volume is displaced.

In the present disclosure, the process of adsorption and desorption occurs in a continuous mode. There is neither any recycle nor wash step of the media in between any of the adsorption and desorption stages. A column at a specific stage transitions directly to the next stage without any recycle or wash step of the media.

This absence of recycle or wash steps of the media increases the uptime of the overall process whilst decreasing the downtime of each column. Advantageously, this increases annual production of the selective lithium purification process, (albeit not necessarily instantaneous production). Tables 1 and 2 in Example 1 shows that the results of the configuration according to the present disclosure either match or exceed the single column performance of the prior art whilst Table 3 shows that the results of the configuration according to the present disclosure result in a higher uptime by allowing the removal of internal recycles. Table 4 in Example 1 shows that the configuration according to the present disclosure results in an increase in the net throughput of the aqueous lithium salt-containing solution and net lithium product flow.

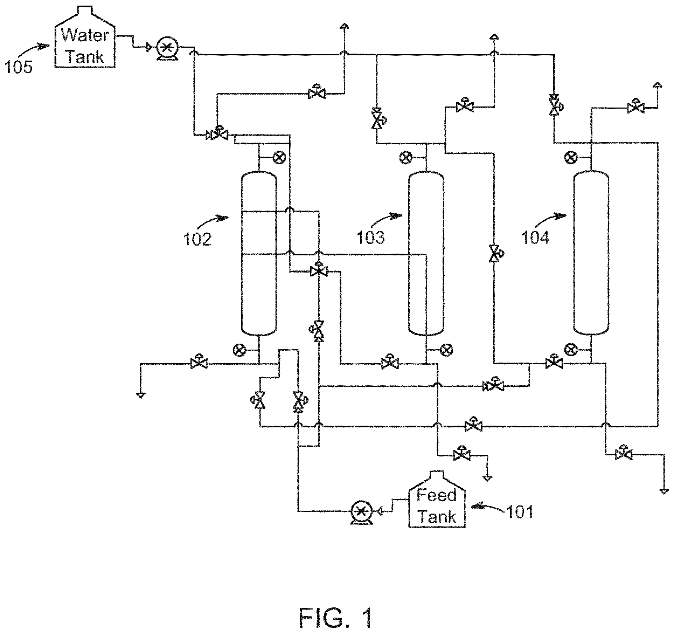

With reference to Figure 1, three columns are operated in series such that at any time, column 102 is at the leading lithium chloride adsorption stage, column 103 is at the trailing lithium chloride adsorption stage, and column 104 is desorbing with deionized water 105. As illustrated in Figure 1, aqueous lithium salt-containing solution 101 flows through column 102 at a leading lithium chloride adsorption stage and subsequently through column 103 at a trailing lithium chloride adsorption stage. The lithium-selective sorbent in columns 102 and 103 adsorbs lithium from aqueous lithium salt-containing solution 101, leaving a barren aqueous lithium salt-containing solution, depleted in lithium, to exit column 102. Column 104 is at a desorbing stage and desorbs adsorbed lithium from a column that was at a leading lithium chloride adsorption stage in a previous cycle.

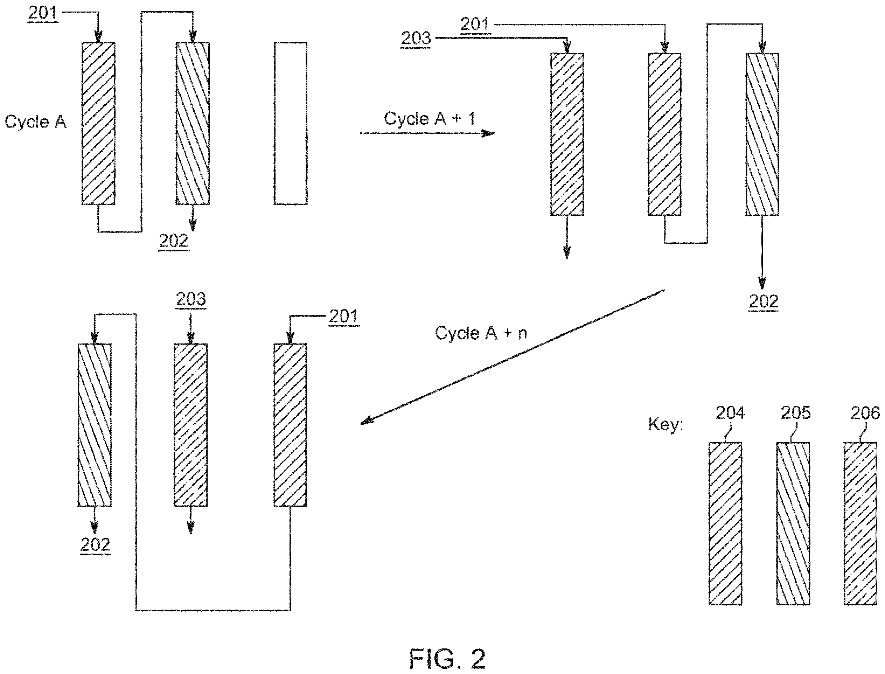

With reference to Figure 2, in Cycle A, aqueous lithium salt-containing solution 201 flows through a column at a leading lithium chloride adsorption stage 204 and subsequently through a column at a trailing lithium chloride adsorption stage 205. The lithium-selective sorbent in columns at positions 204 and 205 adsorbs lithium from aqueous lithium salt-containing solution 201, leaving a barren aqueous lithium salt-containing solution 202, depleted in lithium, to exit the column at trailing lithium chloride adsorption stage 205. Once a specific volumetric setpoint is reached, the arrangement moves to the next stage at Cycle A + 1 and columns at positions 204 and 205 rotate where they are in the operating cycle. The column at leading lithium chloride adsorption stage 204 move to desorption stage 206 for desorption of adsorbed lithium and the column at a trailing lithium chloride adsorption stage 205 moves to a position at leading lithium chloride adsorption stage 204.

In subsequent cycles, Cycle A + n, the column at desorption stage 206 moves to a position at trailing lithium chloride adsorption stage 205; the column at leading lithium chloride adsorption stage 204 moves to a position at desorption stage 206 for desorption of adsorbed lithium; and the column at trailing lithium chloride adsorption stage 205 moves to a position at leading lithium chloride adsorption stage 204.

### EXAMPLES

### Example 1

Three 4' x 1" columns were loaded with a layered aluminum double hydroxide chloride lithium selective sorbent and configured to operate either in series or isolated for desorption, with desorption being in a counter-current fashion. The feed source for adsorption was a synthetic brine consisting of approximately 110 ppm of lithium ions, 16 000 ppm of calcium ions, and 44 000 ppm of sodium ions, all added in the chloride form. The columns were operated such that at any time, one column was at the leading lithium chloride adsorption stage, one column was at the trailing lithium chloride adsorption stage and one column was desorbing with deionized water.

Table 1 shows the bed volumes (BVs) of the proposed operating cycle according to the present disclosure. In Table 1, "Onstream 1" corresponds to the column at the leading lithium chloride adsorption stage, "Onstream 2" corresponds to the column at the trailing lithium chloride adsorption stage, and "Elution" corresponds to the desorbing column. In Table 1, the step labelled "Void volume" in this operating cycle is the first portion of desorption (the contents of leftover feedstock in the column from the previous step which are recycled to the feed tank).

Table 2 shows the bed volumes (BVs) of a known operating cycle of the prior art, including recycle stages (such as Onstream Recycle and Elution Recycle stages) which comprise approximately 50% of the bed volumes.

The results from the operating cycles shown in Table 1 and Table 2 both achieved the same separation performance for lithium / sodium / calcium. In particular, for Table 1 run in accordance with the present disclosure, the lithium product concentration in the eluate stream was 259.4 - 272.2 mg/l with a 99.9% separation performance, compared to a lithium product concentration of 269.3 mg/l with a 99.4% separation performance for Table 2 run in accordance with an operating cycle of the prior art. Furthermore, for Table 1 run in accordance with the present disclosure, the calcium concentration in the eluate stream was 584.8 - 876.6mg/l with a 97.0% - 98.0% separation performance, compared to a calcium concentration of 781.8mg/l with a 98.4% separation performance for Table 2 run in accordance with an operating cycle of the prior art.

On a per-column basis, however, the results of the three-bed configuration according to the present disclosure and as described in Table 1 had higher uptime, as shown in Table 3.

In addition, Table 4 shows that the three-bed configuration according to the present disclosure and described in Table 1 had a larger net flow-rate of product streams and feed streams. This means that for a fixed lithium production rate or a fixed net feed flowrate, less or smaller capital equipment is necessary compared to a collection of columns operating as single vessels according to the prior art.

### Tables:

**Table 1: Operating Cycle of Present Disclosure**

| **Cycle stage** | **Bed volumes** |
|---|---|
| Onstream 1 | 7.5 |
| Onstream 2 | 7.5 |
| Void volume | 0.8 |
| Elution | 3.2 |
| Total | 19 |

**Table 2: Single Column Operating Cycle of Prior Art**

| **Cycle stage** | **Bed volumes** |
|---|---|
| Water Void | 0.4 |
| Onstream | 7.6 |
| Onstream Recycle | 7.4 |
| Feed Void | 0.8 |
| Elution | 3 |
| Elution Recycle | 2.2 |

**Table 3: Improved uptime with present disclosure**

| **Uptime/downtime** | **Present disclosure** | **Prior art** |
|---|---|---|
| Uptime | 79% | 70% |
| Downtime | 21% | 30% |

**Table 4: Improved flow-rate of product streams and feed streams with present disclosure**

| | **Present disclosure** | **Prior art** |
|---|---|---|
| Product net flow (BV/hr) | 2.53 | 2.10 |
| Feed net flow (BV/hr) | 5.92 | 5.61 |
| Product increase | 120% | 106% |

The disclosure provided herein describes features in terms of preferred and exemplary embodiments thereof. Numerous other embodiments, modifications and variations within the scope and spirit of the appended claims will occur to persons of ordinary skill in the art from a review of this disclosure.

## Claims

1. A process for selectively purifying a lithium product stream from an aqueous lithium salt-containing solution in a continuous mode, said process comprising the steps of:
a. introducing said aqueous lithium salt-containing solution to an arrangement of three or more packed-bed columns in series each filled with a lithium selective sorbent, wherein at least two of said three or more columns are at an adsorption stage, with one at a leading lithium chloride adsorption stage and one or more at a trailing lithium chloride adsorption stage, and at least one of said three or more columns is simultaneously at a lithium chloride desorption stage;
b. flowing said aqueous lithium salt-containing solution through said at least two of said three or more columns at a leading lithium chloride adsorption stage and a trailing lithium chloride adsorption stage to adsorb lithium chloride from the aqueous lithium salt-containing solution and respectively form a fully-saturated sorbent and a partially-saturated sorbent;
c. flowing a desorbent fluid through said at least one of said three or more columns at a lithium chloride desorption stage to desorb lithium chloride from the fully-saturated sorbent in a column from a leading lithium chloride adsorption stage of a previous cycle in an eluate stream; and
d. recovering a lithium product stream from the eluate stream,
wherein when the lithium selective sorbent in said column at a leading lithium chloride adsorption stage is fully-saturated with lithium chloride, said column transitions directly to said lithium chloride desorption stage to desorb lithium chloride once appropriate void volume is displaced; said column at a trailing lithium chloride adsorption stage transitions directly to said leading lithium chloride adsorption stage for further adsorption of lithium chloride; and said column at a lithium chloride desorption stage transitions directly to said trailing lithium chloride adsorption stage for initial adsorption of lithium chloride once appropriate void volume is displaced; without any intermediate washing stages of the media between any of said transitions.

2. The process of claim 1, wherein said aqueous lithium salt-containing solution is a naturally occurring solution or a synthetic solution.

3. The process of claim 1 or 2, wherein said lithium selective sorbent is an ion sieve adsorbent, a lithium-metal oxide adsorbent, a mixed metal oxide adsorbent, an alkali or alkali earth metal/alumina matrix, transition metal/alumina matrix or a molecular sieve adsorbent.

4. The process of any of the proceeding claims, wherein said desorption in step c) is co-current or counter current with respect to said adsorption stage in step b).

5. The process of any of the proceeding claims, wherein said desorbent fluid is water, pH adjusted water or a polar organic solvent.

6. The process of any of the proceeding claims, wherein the desorbent fluid is derived from a process operation or is a recycled process stream.

7. The process of any of the proceeding claims, wherein the aqueous lithium salt-containing solution is subject to a pre-treatment step of mechanical pre-treatment and/or pH adjustment.

8. Apparatus for selectively purifying a lithium product stream from an aqueous lithium salt-containing solution in a continuous mode, said apparatus comprising:
a circuit of three or more packed-bed columns in series each filled with a lithium selective sorbent, wherein at least two of said three or more columns are at an adsorption stage, with one at a leading lithium chloride adsorption stage and one or more at a trailing lithium chloride adsorption stage, and at least one of said three or more columns is simultaneously at a lithium chloride desorption stage;
wherein when the lithium selective sorbent in said column at a leading lithium chloride adsorption stage is fully-saturated with lithium chloride, said column transitions directly to said lithium chloride desorption stage to desorb lithium chloride once appropriate void volume is displaced; said column at a trailing lithium chloride adsorption stage transitions directly to said leading lithium chloride adsorption stage for further adsorption of lithium chloride; and said column at a lithium chloride desorption stage transitions directly to said trailing lithium chloride adsorption stage for initial adsorption of lithium chloride once appropriate void volume is displaced; without any intermediate washing stages of the media between any of said transitions.

9. The apparatus of claim 8, wherein said aqueous lithium salt-containing solution is a naturally occurring solution or a synthetic solution.

10. The apparatus of claim 8 or 9, wherein said lithium selective sorbent is an ion sieve adsorbent, a lithium-metal oxide adsorbent, a mixed metal oxide adsorbent, an alkali or alkali earth metal/alumina matrix, transition metal/alumina matrix or a molecular sieve adsorbent.

11. The apparatus of any of claims 8 to 10, wherein said desorption stage is co-current or counter current with respect to said adsorption stage.

12. The apparatus of any of claims 8 to 11, wherein said desorbent fluid is water, pH adjusted water or a polar organic solvent.

13. The apparatus of any of claims 8 to 12, wherein the desorbent fluid is derived from a process operation or is a recycled process stream.

14. The apparatus of any of claims 8 to 13, wherein the aqueous lithium salt-containing solution is subject to a pre-treatment step of mechanical pre-treatment and/or pH adjustment.
